Europäisches Patentamt

European Patent Office

Office européen des brevets

(19)

(11) Publication number: **0 100 178**
**B1**

(12) **EUROPEAN PATENT SPECIFICATION**

(45) Date of publication of patent specification: **28.09.88**

(51) Int. Cl.⁴: **G 02 B 27/28**

(21) Application number: **83304027.2**

(22) Date of filing: **11.07.83**

(54) Polarizing elements.

(30) Priority: **14.07.82 JP 122641/82**
**31.08.82 JP 151529/82**
**31.08.82 JP 151530/82**
**31.03.83 JP 53593/83**
**30.04.83 JP 76573/83**

(43) Date of publication of application:
**08.02.84 Bulletin 84/06**

(45) Publication of the grant of the patent:
**28.09.88 Bulletin 88/39**

(84) Designated Contracting States:
**DE FR GB IT NL**

(56) References cited:
**CH-A- 369 918**
**DE-C- 932 636**
**GB-A-1 126 392**
**GB-A-1 141 599**
**US-A-3 058 393**
**US-A-4 121 883**

**ELECTRONICS LETTERS, vol. 15, no. 25, 1979**
**IWAMURA et al. "Simple polarisation-**
**independent optical circulator for optical**
**transmission systems", pages 830, 831**

(73) Proprietor: **FUJITSU LIMITED**
**1015, Kamikodanaka Nakahara-ku**
**Kawasaki-shi Kanagawa 211 (JP)**

(72) Inventor: **Shirasaki, Masataka**
**Minowa-Bldg. 601 1461, Takaishi Asao-ku**
**Kawasaki-shi Kanagawa 215 (JP)**

(74) Representative: **Fane, Christopher Robin King**
**et al**
**HASELTINE LAKE & CO. Hazlitt House 28**
**Southampton Buildings Chancery Lane**
**London, WC2A 1AT (GB)**

Courier Press, Leamington Spa, England.

## Description

The present invention relates to polarizing elements, for example to a polarizing element for use in an optical switch, optical circulator, etc.

An optical switch comprising a polarizing element and a Faraday rotator is well-known. Further, an optical circulator comprising a polarizing element and a Faraday rotator is also well-known. Such a polarizing element used in an optical switch and an optical circulator provides polarized light beams or rays that are separated by a distance which is undesirably large, for example approximately ten millimeters. In the structure of a conventional polarizing element, it is difficult to make the distance less than one millimeter.

Thus polarising elements are known from DE—C—932 636, having a polarising layer disposed obliquely to the direction of the incident light beam, either between adjacent surfaces of a pair of prisms or on a surface of a glass plate, so as to split the light into two component beams polarized at right angles, one of the component beams continuing in the path of the incident beam while the other is deflected and is then reflected so as to continue parallel to the undeflected beam. The beams may be recombined by passage through a similar polarising element in the reverse direction.

In one arrangement each such polarising element comprises a right-angle prism and a parallel-faced prism with the polarising layer disposed between the hypotenuse face of the right-angle prism and one of the parallel faces of the other prism, and the undeflected beam being reflected at the opposite parallel face thereof by total internal reflection or by a metal coating. The two beams emerge from the first element through different prism faces and enter the second element through different prism faces.

It is desirable to provide a miniature or compact polarising element a reasonably low cost.

According to the present invention a polarising element comprises first and second right-angle prisms and a transparent plate having parallel main surfaces, the thickness of the plate being in the range from 0.2 to 1.5 mm, a polarisation separating layer being provided on a portion of a first one of said main surfaces of the plate, and an optical reflecting layer being provided on a portion of the second main surface, said transparent plate being interposed between the two right angle prisms in contact with the prisms so that a light beam perpendicularly incident on a free surface of one of the prisms and impinging on said polarisation separating layer is separated into two respectively polarised light beams, that one of said polarised light beams is then reflected by said reflecting layer, and that two respective parallel output light beams are perpendicularly output through a common free surface of one of said prisms.

It is preferred that the transparent flat plate be a glass plate.

As the polarisation separating layer, a dielectric multilayer is advantageously used. The dielectric multilayer may be made of $TiO_2$ and $SiO_2$.

It is preferred that the reflecting layer be a dielectric multilayer or a metal layer. The dielectric multilayer may be made of $TiO_2$ and $SiO_2$. The metal layer is advantageously made of copper having a thickness of about 300 nm (300 Å).

The polarizing element of the present invention thus comprises a first right-angle prism and a second right-angle prism, a polarization separating layer being disposed between the first prism and the transparent flat plate and optical reflecting material being disposed between the transparent flat plate and the second prism.

It is preferred that the polarization separating layer is disposed betqeen the hypotenuse surface of the first prism (i.e. facing towards the right angle) and one surface of the transparent flat plate, and the optical reflecting layer is disposed between the hypotenuse surface of the second prism (and the other surface of the transparent flat plate.

In another embodiment the polarization separating layer is disposed between the hypotenuse surface of the first prism and one surface of the transparent flat plate, and the optical reflecting layer is disposed between a surface of the second prism forming a right angle and the other surface of the transparent plate.

In an example of such preferred embodiments there may be provided a wave plate adhered to the first prism by a transparent adhesive having substantially the same refractive index as that of the prism.

An embodiment of the present invention can provide a polarizing element which can be efficiently used for near infrared rays.

Reference will now be made, by way of example, to the accompanying drawings, in which:

Figure 1 is a schematic view of an optical switch incorporating a prior polarizing element.

Figure 2 is a schematic view of the structure of a prior polarizing element.

Figure 3 is a schematic view of another polarizing element.

Figures 4A and 4B are schematic views of an embodiment of a polarizing element according to the present invention.

Figure 5 is a schematic view of an example of an optical switch which makes use of the polarizing element shown in Fig. 4B.

Figure 6 is a schematic view of another example of an optical switch which makes use of another polarizing element embodying the present invention.

Figure 7 is a schematic view of another embodiment of a polarizing element according to the present invention.

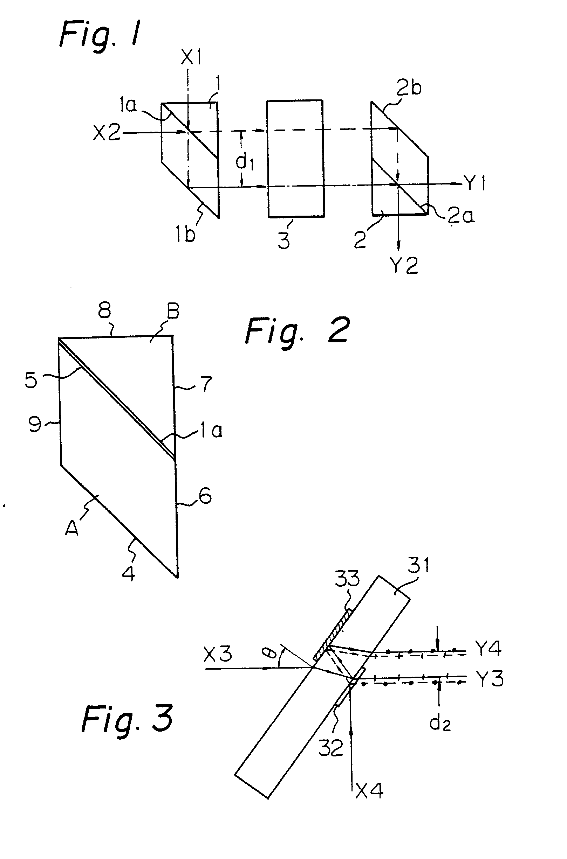

Referring to Figure 1, horizontally polarized components of incident rays $X_1$, $X_2$, pass through a polarization separating film 1a and are transmitted to a Faraday rotator 3. On the other hand, vertically polarized components of these rays are reflected by the polarization separating film 1a and then transmitted to the Faraday rotator 3.

Conventionally, the distance $d_1$ between the optical paths of the horizontally polarized ray and the vertically polarized ray separated by a polarizing element 1 is approximately ten millimeters.

The distance $d_1$ is based on the geometric size of the polarizing element 1, namely, the distance between the surface of the polarization separating film 1a and the reflection surface 1b.

The structure of another conventional polarizing element is composed of segments A and B as shown in Fig. 2. The segments A and B are separately produced.

The polarization separating film 1a is provided on part of the segment A and then the segment B is laminated to the segment A since it is necessary that the surfaces 4 and 5 of Fig. 2 be kept precisely parallel and that the surfaces 6, 7, 8, and 9 of Fig. 2 be precisely and plainly polished. Further, the segments A and B are assembled so that the surface 6 of the segment A and the surface 7 of the segment B are aligned in the same plane.

Thus, it is not easy to miniaturize the polarizing element, particularly whilst maintaining the precise structure thereof as mentioned above.

Fig. 3 shows a polarizing element structure wherein reference numeral 31 denotes a glass plate having a thickness of about 1 mm and parallel surfaces. On a portion of a surface of the glass plate 31, a polarization separating layer 32 consisting of a dielectric multilayer of, for example, $TiO_2$ and $SiO_2$ is formed.

On a portion of the opposite surface of the glass plate 31, a reflecting layer 33 consisting of a metal layer of, for example, copper or a dielectric multilayer of, for example, $TiO_2$ and $SiO_2$ is formed. Particularly, if copper is used as the reflecting layer, the polarizing element can be used in a wavelength ranging from 1.3 μm to 1.55 μm. The polarization separating layer 32 and the reflecting mirror 33 can be formed by ordinary vacuum evaporation or sputtering and a photoetching process.

In the resulting polarizing element, incident light from the direction $X_3$ is separated by the layer 32 and a component having horizontal polarization is passed therethrough in the direction $Y_3$ and a component having vertical polarization is reflected by the layer 32 and the mirror 33 into the direction $Y_4$.

On the other hand, incident light from the direction $X_4$ is separated by the layer 32 and a component having horizontal polarization is passed through the polarizing element in the direction $Y_4$ and a component having vertical polarization is reflected by the layer 32 into the direction $Y_3$. In this case, the distance $d_2$ between the incident light $Y_3$ and $Y_4$ is calculated from the following equation:

$$d_2 = 2t \cdot \cos\theta \cdot \sin\theta / (n^2 - \sin^2\theta)^{1/2}$$

in which θ is an incident light angle formed by light $X_3$ transmitted to the polarizing element, t is the thickness of the glass plate 31, and n is the refractive index thereof. When the values of t, θ, and n are 1 mm, 45°, and 1.5, respectively, the value of $d_2$ calculated from the above equation is approximately equal to 1.26 mm.

If the parallelism of both surfaces of the glass 31 is maintained, a polarizing element using a thin glass 31 can be used so that the distance $d_2$ can be decreased in accordance with the thinness of the glass.

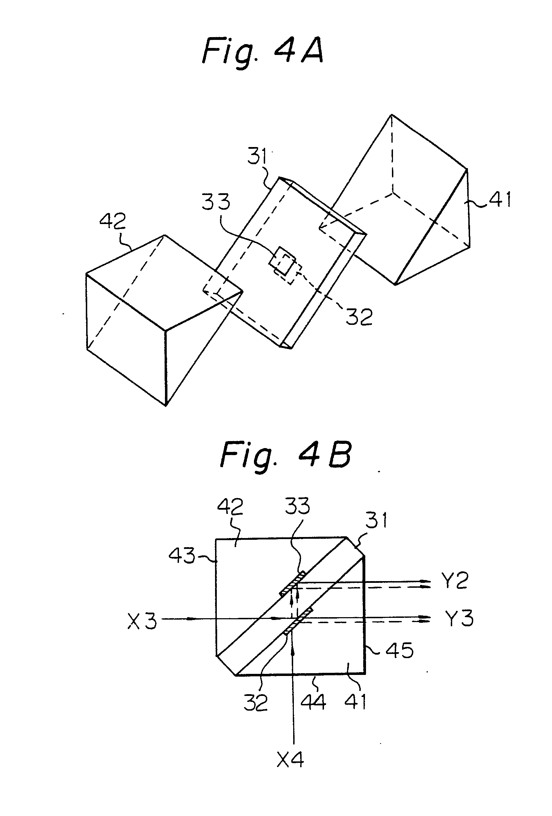

Figures 4A and 4B show an example of a polarizing element wherein a glass plate 31 provided with a polarization separating layer 32 and a reflecting layer 33 as shown in Fig. 3 is assembled with right-angled triangular prisms 41 and 42 having the same refractive index as that of the glass plate 31 so that the glass plate 31 is disposed between the respective hypotenuse faces of the prisms 41 and 42. Figure 4A is a perspective view of the prisms and glass plate before the assembly thereof, and Fig. 4B is a view thereof after the assembly thereof. Since the light from the direction $X_3$ and $X_4$ impinges on the respective surfaces 43 and 44 of the polarizing element substantially perpendicularly as shown in Fig. 4B, reflection loss on the incident surface 43 or 44 is reduced and the incident light angle and the reflection angle are increased at the interface between the polarization separating layer 32 and the glass plate 31. Thus, the separation property in polarization can be improved.

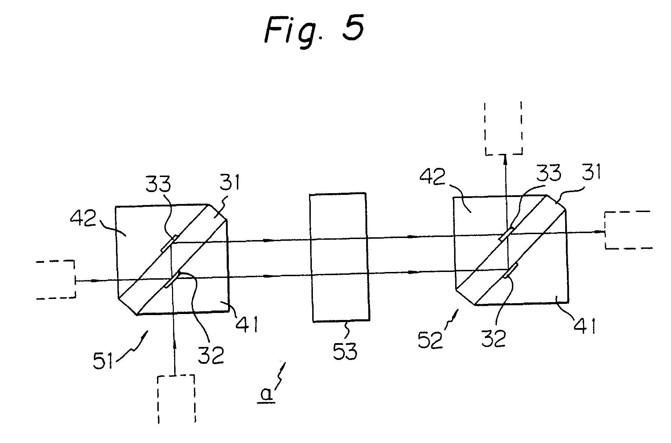

The polarizing element shown in Fig. 4B can be used in an optical switch *a* as shown in Fig. 5. The optical switch is composed of polarizing elements 51 and 52 and a Faraday rotator of, for example, yttrium-iron-garnet (YIG). The same reference numerals in Fig. 5 as those in Figs. 4A and 4B denote the same elements. The optical systems are indicated by the broken lines.

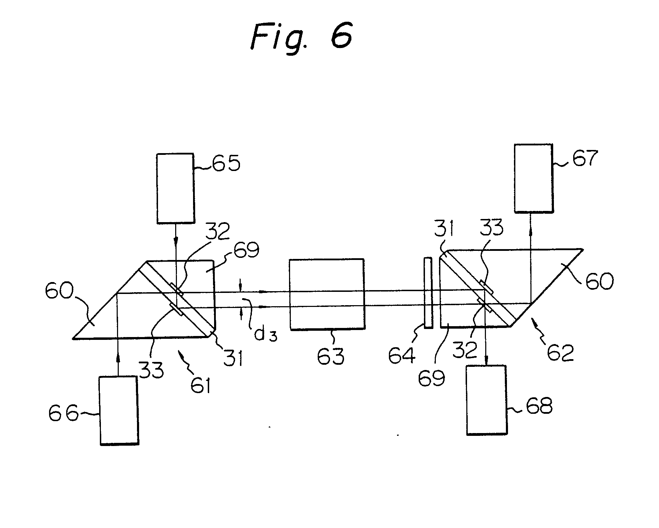

In Fig. 6, another type of optical switch is shown. The optical switch in Fig. 6 is composed of other examples of polarizing elements 61 and 62, a Faraday rotator 63 of, for example, YIG, and a wave plate 64. Reference numerals 65 and 66 are input optical systems, and reference numerals 67 and 68 are output optical systems. The polarizing elements 61 and 62 consist of a glass plate 31, a polarization separating layer 32, a reflecting layer 33, and right angled triangular prisms 60 and 69. The polarization separating layer 32 is disposed between a surface of the glass plate 31 and the hypotenuse face of the prism 69, and the reflecting layer 33 is disposed between a surface of the glass plate 31 and one of the two faces bounding the right angle of the rectangular prism 60. The structure of an optical switch as umown in Fig. 6 can be advantageously used so that the optical system can be arranged in a direction parallel to the input rays and the output rays. Therefore, the structure of the optical switch can make the optical switch compact. The wave plate 64 is advantageously provided to adjust a polarizing angle of an output ray to obtain the angle of 90° when the polarizing angle is not 90° between the polarizing surface before passing through Faraday rotator and the polarizing surface after passing through the Faraday rotator.

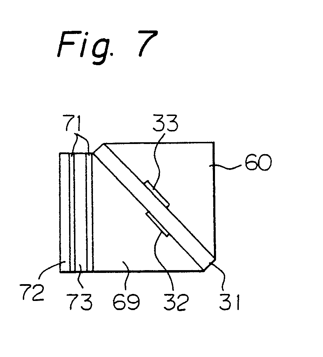

It is preferred that a wave plate 73 (Fig. 7) be adhered to the prism 69 with a bonding medium 71. Further, in order to prevent the surface of the wave plate from undergoing mechanial shock, etc.; a glass plate 72 may be adhered to the wave plate 73 as shown in Fig. 7. Such a structure can make a polarizing element having a wave plate compact.

**Claims**

1. A polarising element comprising first and second right-angle prisms (41, 42) and a transparent plate (31) having parallel main surfaces, the thickness of the plate being in the range from 0.2 to 1.5 mm, a polarisation separating layer (32) being provided on a portion of a first one of said main surfaces of the plate, and an optical reflecting layer (33) being provided on a portion of the second main surface, said transparent plate being interposed between the two right-angle prisms in contact with the prisms so that a light beam perpendicularly incident on a free surface of one of the prisms and impinging on said polarisation separating layer (32) is separated into two respectively polarised light beams, that one of said polarised light beams is then reflected by said reflecting layer (33), and that two respective parallel output light beams are perpendicularly output through a common free surface of one said prisms.

2. A polarising element according to claim 1 wherein the transparent plate (31) is a glass plate.

3. A polarising element according to claim 1 or claim 2 wherein one or each of the polarisation separating and reflecting layers (32, 33) is a dielectric multilayer.

4. A polarising element according to claim 3, wherein the dielectric multilayer is made of $TiO_2$ and $SiO_2$.

5. A polarising element according to any preceding claim, wherein the reflecting layer (33) is a metal layer.

6. A polarising element according to claim 1 further comprising a wave plate (73) adhesively secured to one of the prisms (69) by a transparent adhesive having substantially the same refractive index as said one prism.

7. A polarising element according to any preceding claim wherein the prisms (41, 42) and the transparent plate (31) have the same refractive index.

8. An optical switch, comprising two polarising elements as claimed in claim 1, arranged so that said two respective output light beams output from a common free surface of a first one of said polarising elements (51) are provided as respective input light beams to a respective common free surface of the second polarising element (52), and a Faraday rotator (53) located between said two polarising elements to receive as an input said two respective output beams output from said first polarising element and to output said two light beams corresponding thereto as said respective input light beams to said second polarising element.

9. The optical switch of claim 8, comprising a wave plate (64) combined in series with said Faraday rotator (63), the combination thereof receiving as inputs said two output light beams from said first polarising element (61), and providing as outputs from the combination said two corresponding light beams as said respective input light beams to said second polarising element (62).

10. An optical switch according to claim 8 or claim 9, also comprising two input optical systems (65, 66) arranged to provide two mutually perpendicular or oppositely directed light beams respectively perpendicularly incident on a surface of the first and second prisms of said first polarising element (61), and two output optical systems (67, 68) arranged to receive two mutually perpendicular or oppositely directed light beams perpendicularly emerging from a surface of the first and second prisms of said second polarising element (62).

**Patentansprüche**

1. Polarisierendes Element mit ersten und zweiten rechtwinkligen Prismen (41, 42) und einer transparenten Platte (31), die parallele Hauptoberflächen hat, deren Plattendicke im Bereich von 0,2 bis 1,5 mm ist, einer Polarisationstrennschicht (32), die auf einem ersten Abschnitt einer ersten der genannten Hauptoberflächen der genannten Platte vorgesehen ist, und einer optisch reflektierdenden Schicht (33), die auf einem Abschnitt der zweiten Hauptoberfläche vorgesehen ist, welche transparente Platte zwischen den beiden rechtwinkligen Prismen angeordnet ist, in Kontakt mit den Prismen, so daß ein Lichtstrahl, der senkrecht auf eine freie Oberfläche auf eines der Prismen auftrifft und auf die genannte Polarisationstrennschicht (32) auftrifft, in zwei jeweils polarisierte Lichtstrahlen getrennt wird, daß einer der genannten Lichtstrahlen dann durch die genannte reflektierende Schicht (33) reflektiert wird, und daß beide jeweils parallele Ausgangslichtstrahlen senkrecht durch eine gemeinsame freie Oberfläche von einem der genannten Prismen ausgegeben werden.

2. Polarisierendes Element nach Anspruch 1, bei der die genannte transparente Platte (31) eine Glasplatte ist.

3. Polarisierendes Element nach Anspruch 1 oder 2, bei der eine oder jede der Polarisationstrenn- und -reflektionsschichten (32, 33) eine dielektrische Vielfachschicht ist.

4. Polarisierendes Element nach Anspruch 3, bei dem die dielektrische Vielfachschicht aus $TiO_2$ und $SiO_2$ besteht.

5. Polarisierendes Element nach einem der vorhergehenden Ansprüche, bei dem die reflektierende Schicht (33) eine Metallschicht ist.

6. Polariserendes Element nach Anspruch 1, ferner mit einer Wellenplatte (73), die haftend an einem der Prismen (69) mit einem transparenten Klebmittel gesichert ist, welches im wesentlichen denselben Brechungsindex wie das eine genannte Prisma hat.

7. Polarisierendes Element nach einem der vorhergehenden Ansprüche, bei dem die Prismen (41, 42) und die transparente Platte (31) denselben Brechungsindex haben.

8. Optischer Schalter mit zwei polarisierenden Elementen nach Anspruch 1, die so angeordnet sind, daß zwei jeweilige Ausgangslichtstrahlen ausgegeben werden von einer gemeinsamen freien Oberfläche eines ersten der genannten polarisierenden Elemente (51), die als jeweilige Eingangslichtstrahlen an eine entsprechende gemeinsame freie Oberfläche des zweiten polarisierenden Elementes (52) geliefert werden, und mit einem Faraday-Rotator (53), der zwischen den genannten beiden polarisierenden Elementen angeordnet ist, um als einen Eingang die genannten beiden jeweiligen Ausgangsstrahlen zu empfangen, die von dem genannten ersten polarisierenden Element ausgegeben werden, und um die genannten beiden Lichtstrahlen, die ihnen als die genannten jeweiligen Eingangslichtstrahlen entsprechen, an das genannte zweite polarisierende Element auszugeben.

9. Optischer Schalter nach Anspruch 8, mit einer Wellenplatte (64), in Reihe kombiniert mit dem genannten Faraday-Rotator (63), deren Kombination als Eingänge die genannten beiden Ausgangslichtstrahlen von dem genannten ersten polarisierenden Element (61) empfängt, und als Ausgänge von der Kombination die genannten beiden entsprechenden Lichtstrahlen als die genannten jeweligen Eingangslichtstrahlen für das genannte zweite polarisierende Element (62) liefert.

10. Optische Schalter nach Anspruch 8 oder 9, ferner mit zwei optischen Eingangssystemen (65, 66), die angeordnet sind, um zwei wechselseitig senkrechte oder entgegengesetzt gerichtete Lichtstrahlen zu geben, die jeweils senkrecht auf eine Oberfläche des ersten und zweiten Prismas des genannten ersten polarisierenden Elements (61) auftreffen und zwei optische Ausgangssysteme (67, 68), die angeordnet sind, um zwei wechselseitig senkrechte oder entgegengesetzt gerichtete Lichtstrahlen zu empfangen, die senkrecht von einer Oberfläche des ersten und zweiten Prismas des genannten zweiten polarisierenden Elementes (62) austreten.

**Revendications**

1. Elément polarisant comprenant un premier et un second prisme droit (41, 42) et une lame transparente (31) ayant des surfaces principales parallèles, l'épaisseur de la lame étant de 0,2 à 1,5 mm, une couche séparatrice de polarisation (32) étant prévue sur une partie d'une première surface principale de la lame et une couche optique réfléchissante (33) étant prévue sur une partie de la seconde surface principale, la lame transparente étant disposée entre les deux prismes droits, en contact avec eux, de manière qu'un faisceau lumineux incident, tombant perpendiculairement sur une surface libre d'un des prismes et atteignant la couche séparatrice de polarisation (32), soit séparé en deux faisceaux lumineux à polarisations respectives, que l'un des faisceaux polarisés soit réfléchi ensuite par la couche réfléchissante (33) et que deux faisceau lumineux de sortie parallèles sortent perpendiculairement à travers une surface libre commune d'un des prismes.

2. Elément polarisant selon la revendication 1, dans lequel la lame transparente (31) est une lame de verre.

3. Elément polarisant selon la revendication 1 ou 2, dans lequel l'une ou chacune des couches séparatrice de polarisation et réfléchissante (32, 33) est une multicouche diélectrique.

4. Elément polarisant selon la revendication 3, dans lequel la multicouche diélectrique est en $TiO_2$ et $SiO_2$.

5. Elément polarisant selon l'une quelconque des revendications précédentes, dans lequel la couche réfléchissante (33) est une couche métallique.

6. Elément polarisation selon la revendication 1, comprenant en outre une lame onde (73) fixée par collage à l'un des prismes (69) par un adhésif transparent ayant sensiblement le même indice de réfraction que ce prisme.

7. Elément polarisant selon l'une quelconque des revendications précédentes, dans lequel les prismes (41, 42) et la lame transparente (31) ont le même indice de réfraction.

8. Commutateur optique, comprenant deux éléments polarisants selon la revendication 1, qui sont disposés de manière que les deux faisceau lumineux de sortie, sortant d'une surface libre commune d'un premier de ces éléments polarisants (51) constituents des faisceau lumineux d'entrée pour une surface libre commune du second élément polarisant (52), un rotateur à effet Faraday (53) étant disposé entre les deux éléments polarisante pour recevoir, à son entrée, les deux faisceaux de sortie du premier élément polarisant et pour délivrer à sa sortie les deux faisceaux lumineux correspondant à eux en tant que faisceaux lumineux d'entrée pour le second élément polarisant.

9. Commutateur optique selon la revendication 8, comprenant une lame onde (64) combinée et disposée en série avec le rotateur à effet Faraday (63), la combinaison de cette lame et de ce rotateur recevant, à son entrée, les deux faisceaux lumineux de sortie du premier élément polarisant (61) et délivrant, à sa sortie, les deux faisceau lumineux correspondants en tant que faisceaux lumineux d'entrée pour le second élément polarisant (62).

10. Commutateur optique selon la revendication 8 ou 9, comprenant également deux systèmes optiques d'entrées (65, 66) agencés pour fournir deux faisceau lumineux mutuellement perpendicularies ou dirigés en sens contraire, qui tombent perpendiculairement, l'un sur une surface du premier prisme et l'autre sur une surface du second prisme du premier élément polarisant (61), de même que deux systèmes optiques de sortie (67, 68) qui sont agencés pour recevoir deux faisceaux lumineux mutuellement perpendiculaires ou dirigés dans des sens contraires, qui émergent perpendicularement l'un d'une surface du premier prisme et l'autre d'une surface du second prisme du second élément polarisant (62).

Fig. 1

Fig. 2

Fig. 3

## Fig. 4A

## Fig. 4B

# Fig. 5

# Fig. 6

# Fig. 7